# EUROPEAN PATENT APPLICATION

(11) **EP 0 962 664 A1**
(43) Date of publication of application: **08.12.1999**
(21) Application number: 98304482.7
(22) Date of filing: 05.06.1998
(51) Int. Cl.: F16B 5/06

(54) **Releasable fastening element**

(71) Applicant: McKechnie UK Limited, Walsall, West Midlands WS9 8DS (GB)
(72) Inventor: Taylor, Kenneth, Aldershot, Hampshire, GU11 3HH (GB)
(74) Representative: Haley, Stephen

(57) **Abstract**

A latch (1) for latching two elements (8,9) and arranged for retention on a first element (8) to be latched. The latch (1) comprises at least two latching members (2) arranged to extend, in use, through the first element (8) and a second element (9) to be latched, each of the latching members (2) having a retaining member (3) formed thereon.

At least one engaging member (4) is arranged to engage, in use, with a surface of the first element (8) and arranged to prevent passage of the latch (1) through the first element (8) towards the second element (9) in use, the engaging member (4) being attached to the latching members (2), and having an aperture (5) formed therein.

Each of the latching members (2) has a release member (7) attached thereto, each of the release members (7) being positioned so that they can be accessed by a release tool via the aperture (5) in the engaging member.

## Description

This invention relates to a latch for releasably holding two elements, such as panels, together.

Over the years a considerable number of latching mechanisms have been proposed for allowing the latching of two or more elements together. Often, however, such latches are costly and difficult to manufacture, are difficult to install and operate and/or are difficult to release. Furthermore, it is not uncommon for such prior art latches to have little or no resilience, so that vibration breaks them or releases them unnecessarily.

According to the present invention there is provided a latch for latching two elements and arranged for retention on a first element to be latched, the latch comprising:
at least two latching members arranged to extend, in use, through the first element and a second element to be latched, each of the latching members having a retaining member formed thereon; and
at least one engaging member arranged to engage, in use, with a surface of the first element and arranged to prevent passage of the latch through the first element towards the second element in use, the engaging member being attached to the latching members, and having an aperture formed therein, wherein
each of the latching members has a release member attached thereto, each of the release members being positioned so that they can be accessed by a release tool via the aperture in the engaging member.

The engaging member may be formed so that it has one or more sprung members arranged to engage the surface of the first element and to provide resilience to the latch and to compensate for variations in element thickness.

Each of the latch members may have one or more retaining lugs formed thereon. The latch may be formed from a single flat sheet of material. The material may be spring steel or any other appropriate material.

The release members may be arranged such that the latch is released when they are drawn towards one another.

Preferably the latch is arranged to be retained on the first element even after release from the second element.

One example of the present invention will now be described with reference to the accompanying drawings, in which:-
Figures 1A to 1C show a plan and two side views of a latch according to the present invention;
Figures 2A and 2B show side views of the latch of figure 2 within a member to be latched; and
Figures 3A and B show the latch of figures 2A and 2B in a latched position.

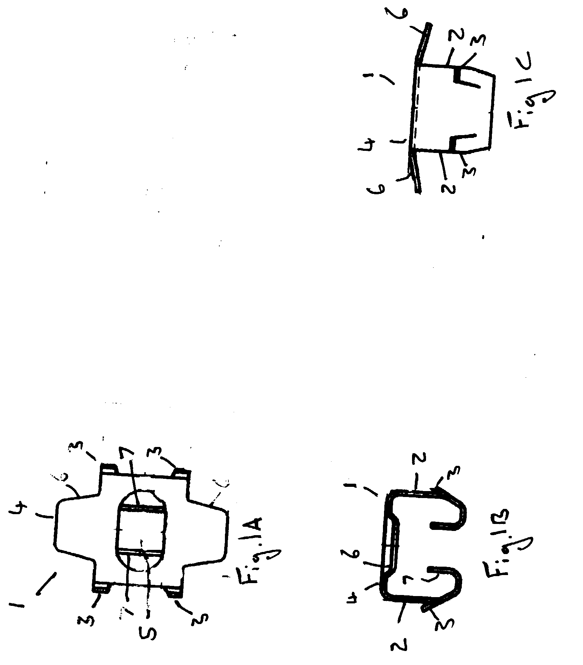

Referring to figures 1A to 1C a latch 1 according to the present invention has two latching members 2, each latching member 2 having retaining members 3 formed thereon. The latch 1 has an engaging member 4 joining the two latching members 2. The engaging member 4 has an aperture 5 formed therein and two sprung members 6. Each of the latching members 2 has a release member 7 attached thereto, and each release member 7 is assessable via the aperture 5 in the engaging member 4.

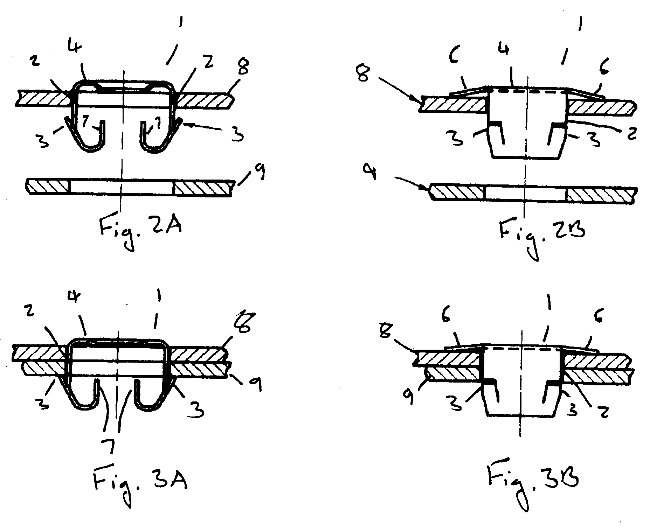

Referring to figures 2A and 2B, the latch 1 of figures 1A to 1C is positioned within a first element 8, which in this example is a panel. The latch 1 sits in an aperture in the panel 8 the sides of which engage with the retaining members 3, thereby retaining the latch 1 in the panel 8. As can be seen from figures 3A and 3B, a second element panel 9, can be latched to the first panel 8 by passage of the latch 1 and engaging members 2 through an aperture formed therein. The retaining members 3 engage with the surface of the second panel 9 to ensure retention. The spring members 6 give the latched arrangement a certain degree of resilience, so that latching is performed quite easily and a certain amount of vibration in the arrangement can be absorbed without the latch 1 being freed from the second panel 9. The spring members 6 also compensate for variations in panel thickness.

To release the latch 1 a tool can be inserted through the aperture 5 and engaged with the release member 7. The release member 7 can then be drawn together, pulling the retaining members 3 out of engagement with the second panel 9, and allowing the latch to pass through the aperture in the panel 9 for removal of the second panel 9, whilst being retained on the first panel 8.

## Claims

1. A latch for latching two elements and arranged for retention on a first element to be latched, the latch comprising:
at least two latching members arranged to extend, in use, through the first element and a second element to be latched, each of the latching members having a retaining member formed thereon; and
at least one engaging member arranged to engage, in use, with a surface of the first element and arranged to prevent passage of the latch through the first element towards the second element in use, the engaging member being attached to the latching members, and having an aperture formed therein, wherein
each of the latching members has a release member attached thereto, each of the release members being positioned so that they can be accessed by a release tool via the aperture in the engaging member.

2. A latch according to claim 1, wherein the engaging member is formed so that it has one or more sprung members arrange to engage the surface of the first element.

3. A latch according to claim 1 or claim 2, wherein the latch members have one or more retaining lugs formed thereon.

4. A latch according to any of claims 1 to 3, formed from a single flat sheet of material.

5. A latch according to claim 4, wherein the material is spring steel.

6. A latch according to any preceding claims, wherein the release members are arranged such that the latch is released when they are drawn towards one another.

7. A latch according to any preceding claim, arranged to be retained on the first element even after release from the second element.
